# EUROPÄISCHE PATENTSCHRIFT

(11) **EP 1 990 217 B1**
(45) Veröffentlichungstag und Bekanntmachung des Hinweises auf die Patenterteilung: **09.12.2009**
(21) Anmeldenummer: 08152041.3
(22) Anmeldetag: 28.02.2008
(51) Int. Cl.: B60C 1/00, C08L 21/00

(54) **Fahrzeugreifen mit zweischichtigem Laufstreifen**
Tyres for a vehicle with dual layer tread strips
Pneu de véhicule doté de bandes de roulement à deux couches

(30) Priorität: 27.04.2007 DE 102007019943
(43) Veröffentlichungstag der Anmeldung: 12.11.2008
(73) Patentinhaber: Continental Aktiengesellschaft, 30165 Hannover (DE)
(72) Erfinder: Wagemann, Jürgen, Dr., 31162 Bad Salzdetfurth (DE); Mergell, Boris, 30890 Barsinghausen (DE); Dettmer, Fabian, 38106 Braunschweig (DE)
(74) Vertreter: Finger, Karsten

(56) Entgegenhaltungen:
- EP-A- 0 098 353
- EP-A- 1 439 205
- EP-A- 1 609 624
- WO-A-2005/044909
- DE-A1-102005 044 997
- JP-A- 5 338 410
- JP-A- 2006 142 486
- JP-A- 2006 142 843
- US-A1- 2006 231 181
- US-B1- 6 204 320

## Beschreibung

Die Erfindung betrifft einen Fahrzeugreifen aus vulkanisiertem Reifengummi, insbesondere einen Winterreifen, mit einem zweischichtigen Laufstreifen in einem sogenannten Cap-Base-Aufbau.

Fahrzeugreifen mit zweischichtigem Laufstreifenaufbau sind bekannt und werden in erster Linie zur Beeinflussung der Reifeneigenschaften über die Gesamtlebensdauer benötigt.

So ist aus der DE 199 46 446 A1 ein Kraftfahrzeugreifen bekannt, bei dem der Cap-Bereich des zweischichtigen Laufstreifens aus einer für den Wintereinsatz geeigneten Gummimischung und der Base-Bereich aus einer für den Sommereinsatz geeigneten Gummimischung besteht. Der Reifen ist für den Ersteinsatz zu Beginn des Winters gedacht, so dass der Cap-Bereich über den Winter bis zum Frühjahr abgefahren wird und den Base-Bereich freilegt, mit dem der Reifen dann als Sommerreifen dienen soll. Die Gummimischungen von Cap- und Base-Bereich unterscheiden sich in ihren Basismischungen für Sommer- und Wintergebrauch und dadurch in ihrer Steifigkeit.

Aus der DE 39 02 602 A1 ist ein Fahrzeugluftreifen mit einer besonderen Anordnung der beiden Laufstreifenschichten bekannt. Das Problem bestand dort darin, dass die Haltbarkeit des Reifens während längeren Gebrauchs durch eine Weichmacherdiffusion aus den weicheren äußeren Bereichen nach innen in Richtung der Festigkeitsträger beeinträchtigt wurde. Ziel war es, die Weichmacherdiffusion in den Gürtellagenbereich hinein zu drosseln, um die Haltbarkeit des Gürtelverbands und damit des Reifens über die Lebensdauer zu verbessern. Dies konnte durch die besondere Anordnung und eine bestimmtes Verhältnis der Weichmacherkonzentrationen in Cap und Base bei im Übrigen gleichartiger Gummimischung erreicht werden.

Ein mit dem oben genannten zusammenhängendes Problem im Stand der Technik besteht darin, dass es über die Zeit immer zu einer Versteifung der Laufstreifenmischungen kommt, die die Gebrauchseigenschaften des Reifens nachhaltig beeinträchtigt. Die Versteifung kommt dadurch zustande, dass Weichmacher aus dem Laufstreifen und wenn vorhanden speziell aus einem Cap-Bereich mit höherer Weichmacherkonzentration in Bauteile mit geringerer Weichmacherkonzentration stattfindet. Verstärkt wird der Effekt durch eine fortlaufende Nachvernetzung in der Gummimischung unter Gebrauchsbedingungen. Die Erhöhung der Laufstreifensteifigkeit wirkt sich besonders nachteilig auf die Tieftemperaturflexibilität der Mischung aus.

Wegen des höheren Weichmacheranteils sind diese Effekte in Winterreifenmischungen besonders ausgeprägt und gleichzeitig besonders schädlich, da gerade dort die Laufstreifen- bzw. Cap-Mischungen weich bleiben und ihren Griff behalten sollen. Die Erhöhung der Laufstreifensteifigkeit eines Winterreifens im Verlaufe des Gebrauchs steht im direkten Konflikt zu Traktionsverhalten unter winterlichen Fahrbedingungen und Bremseigenschaften auf nassen Fahrbahnen, also unerlässlichen Gebrauchseigenschaften.

Der Erfindung liegt daher die Aufgabe zugrunde, eine Versteifung des Laufstreifen-Cap-Bereichs sicher zu verhindern und damit die für Winterreifen relevanten Kerneigenschaften "gute Traktion auf eisiger und/oder verschneiter Fahrbahn" und "Bremsen auf nasser Fahrbahn" bei gleichbleibend hohem Niveau der übrigen Winterreifeneigenschaften über die Gebrauchsdauer zu erhalten.

Zur Lösung dieser Aufgabe ist bei einem Fahrzeugreifen aus vulkanisiertem Reifengummi mit einem zweischichtigen Laufstreifen aus Cap- und Basebereich mit unterschiedlichen Gummimischungen vorgesehen, dass die Cap- und Base-Mischungen so ausgewählt sind, dass sich die Shore-A-Härte der Cap-Gummimischung mit zunehmender Laufleistung des Reifens verringert.

Im Sinne dieser Erfindung wird die Steifheit einer Gummimischung durch die Shore-A-Härtewerte charakterisiert. Die Shore A Härte wird an Laborprüfkörpern nach DIN 53 505, ASTM D2240 bestimmt und am Reifen, wie anhand der Beispiele näher beschrieben, an der Lauffläche des Reifens mittels einer mobilen Handmessapparatur, ebenfalls im Einklang mit DIN 53 505/IS0868.

Der Fahrzeugreifen besteht aus den üblichen Reifenbestandteilen. In der Regel wird es sich um einen schlauchlosen Radialreifen mit Gürtellagen handeln. Der im Reifenaufbau zum Schluss aufgelegte für den Fahrbahnkontakt zuständige Laufstreifen ist zweischichtig, wobei die äußere Schicht, die sogenannte "Cap", in direkten Kontakt mit der Fahrbahn kommt, während die "Base" unter der Cap oberhalb der Festigkeitsträgerlagen liegt. Wenigstens die Cap-Lage oder Cap- und Base-Lage gemeinsam werden profiliert sein.

Vorzugsweise zeichnet sich der erfindungsgemäße Fahrzeugreifen dadurch aus, dass sich die Shore-A-Härte des Cap-Gummis bei einer Reifenabriebsprüfung nach 10.000 km um wenigstens D Shore-A = 5 verringert.

Die Shore-Härte des Cap-Bereichs ist allgemein zu Gunsten besserer Haftung gerade auch auf nasser oder glatter Fahrbahn geringer als die des Base-Bereichs, d.h. die Cap-Gummimischung ist weniger steif als die Basemischung. Der Unterschied der Anfangs-Shore-A-Werte für Cap- und Base-Bereich kann vorzugsweise auf größer als 5 eingestellt werden.

Der Cap-Bereich sollte bevorzugt eine Anfangs-Shore-A-Härte von höchstens 68 ShA aufweisen.

Der Fahrzeugreifen ist vorzugsweise ein Winterreifen, da für Winterreifen die Lösung der gestellten Aufgabe besonders bedeutsam ist, was nicht ausschließt, dass die Erfindung nicht bei anderen Reifen, z.B. Spezialreifen, Sommer- oder Alljahresreifen, angewendet werden könnte, da auch bei diesen ein Härte- oder Steifigkeitsgradient in Richtung Reifeninneres oder Festigkeitsträger besteht.

Die Lösung der Erfindung kann mit einem Laufstreifen, wie vom Aufbau oben schon beschrieben, erreicht werden, bei dem nur die Kautschukmischung des Cap-Bereichs einen durch Vulkanisation in der Gummimischung fixierbaren Weichmacher enthält und der Cap-Bereich keine Glyceride und kein Faktis enthält.

Zwar offenbart bereits die EP 1 529 806 B1 eine Kautschukmischung für Reifenlaufstreifen, die unter anderem ein flüssiges Polybutadien, also einen durch Vulkanisation in der Gummimischung fixierbaren Weichmacher, enthält. Dort wird jedoch eine spezielle Mischung aus mehreren zusammenwirkenden Bestandteilen zur Lösung einer anderen Aufgabe vorgesehen. Die darin angegebene Mischung soll die Vereinbarkeit eines guten Abriebverhaltens, guten Nassgriffs, guter Traktion auf Eis und Schnee mit gleichzeitig gutem Trockenbremsen ermöglichen. Hierfür wird vorgesehen, dass die Dienkautschuk-basierte Mischung wenigstens ein flüssiges Polybutadien als Weichmacher, zumindest einen polaren Füllstoff, zumindest einen Hochstrukturruß und zumindest ein Glycerid und/oder ein Faktis enthält. Dabei wurde überraschend gefunden, dass die Aufgabe der EP 1 529 806 gerade durch die spezielle Kombination von flüssigem Polybutadien mit Hochstrukturruß und Glycerid und/oder Faktis in füllstoffhaltigen Dienkautschukmischungen gelöst wird.

Die erfindungsgemäße Lösung sieht demgegenüber vor, dass weder Glyceride noch Faktis in der Cap-Mischung vorhanden sind, und benötigt auch keinen Hochstrukturruß, um die Effekte dieser Erfindung zu erzielen.

Es hat sich nämlich überraschend herausgestellt, dass gerade die Kombination eines Cap-Bereichs mit einem durch Vulkanisation fixierbaren Weichmacher, vorzugsweise einem flüssigem Kautschuk als Weichmacher, und eines Base-Bereichs mit einem Standard-Weichmacher für Reifenmischungen, d.h. einem solchen Weichmacher, der keinen Flüssigkautschuk, sondern vorzugsweise einen mineralölhaltigen Weichmacher enthält, die Aufgabe lösen und die Versteifung der Laufstreifengummimischung besonders im Cap-Bereich wirkungsvoll verhindern kann.

Unerwarteterweise kommt es sogar zu einer signifikanten Erweichung des Laufstreifens im Verlaufe des Gebrauchs an einem PKW-Winterreifen, was die Reifeneigenschaften in dem relevanten Zielkonflikt Traktion auf eisiger und verschneiter Fahrbahn und Bremsen auf nasser Fahrbahn verbessert. Dies führt zu Eigenschaftsverbesserungen des PKW-Winterreifens auf winterlichen und nassen Fahrbahnen über seine gesamte Lebensdauer.

Die erfindungsgemäße Zusammensetzung des Laufstreifens wirkt sich im Verlaufe des Reifengebrauchs, und zwar insbesondere unter abrasiven und druckbelasteten Gebrauchsbedingungen (z.B. simuliert durch eine Abriebtest nach 10.000 km Fahrleistung) überraschend in Form einer Erweichung, d.h. einer Verringerung der Shore-A-Werte im Cap-Bereich des Reifenlaufstreifens aus. Eine solche Erweichung bzw. Verringerung der Shore-A-Härte ist bei anderen Laufstreifenmischungen - auch mit Cap-Base-Aufbauten - noch nicht beobachtet worden. Es ergeben sich daher ganz neue Möglichkeiten, ein durch Einstellung der Mischungsbestandteile der Gummimischung erhaltenes Eigenschaftsprofil mit Hilfe der erfindungsgemäßen Weichmacherverteilung in Cap-und-Base-Bereich länger konstant halten zu können.

Mit der Erfindung ist es möglich, auch die für Winterreifen wesentliche Tieftemperaturflexibilität über die Lebensdauer des Reifens zu erhalten, was im Stand der Technik durch die Nachversteifung im Gebrauch nicht gegeben war.

Die Gummimischung für den Base-Bereich wird vorzugsweise unter Verwendung eines mineralölhaltigen Weichmachers hergestellt. Standard-Mineralölmischungen, die als Weichmacher in Kautschukmischungen dienen können, sind dem Fachmann zur Genüge bekannt und müssen hier nicht im Einzelnen diskutiert werden. Als besonders vorteilhaft wird es jedoch derzeit angesehen wenn, das Weichmacheröl ein Mineralölweichmacher mit einem reduzierten Gehalt an polyzyklischen Aromaten ist, vorzugsweise TDAE (Treated Distillate Aromatic Extract), z.B. BP Vivatec 500 (Dahleke KG, Deutschland).

Im Allgemeinen sind folgende Öle, einzeln oder im Gemisch als geeignet anzusehen: TDAE, RAE, MES, weiterhin allgemein aromatische, naphthenische und paraffinische Prozessöle, vorzugsweise keine speziellen Weichmacher wie Polyole, Polyesterpolyole, Terephthalate (Tieftemperaturweichmacher).

Die bevorzugten Mineralölweichmacher besitzen beispielsweise Viskositäten zwischen etwa 3 und 100 oder 5 und 50 mm²/s bei 100 °C und Viskosität-Gravitäts-Konstanten (VGC) zwischen 0,75 und 1,1.

Die Öle oder Mineralöle sind einzeln oder im Gemisch - auch mit anderen Weichmachern außer Flüssigkautschuk - einsetzbar.

Die Gummimischung oder die Gummimischungen für den Laufstreifen werden entsprechend den gewünschten Eigenschaften ausgewählt. Geeignete Laufstreifenmischungen sind dem Fachmann grundsätzlich bekannt.

Als Kautschukkomponente kommen prinzipiell in Frage: Dienkautschuke, insbesondere Naturkautschuk (NR), Polyisopren (IR), Polybutadien (BR), Styrol-Butadien-Copolymer (SBR), insbesondere in lösungspolymerisierter Form (S-SBR) oder in emulsionspolymerisierter Form (E-SBR), Styrol-Isopren-Butadien-Terpolymer, Halobutylkautschuke und Ethylen-Propylen-Dien-Kautschuk (EPDM), sowie Mischungen mit und unter diesen Kautschuktypen.

Im Gemisch mit der Kautschukkomponente werden immer Füllstoffe eingesetzt. Hierfür kommen polare und unpolare Füllstoffe in Frage. Es können alle dem Fachmann bekannten Füllstoffe eingesetzt werden. Häufig werden Silica und/oder Ruß verwendet. Allgemein stehen verschiedene metallische und halbmetallische Oxide und Silikate, sowie Kieselsäure in verschiedensten Formen zur Verfügung. Insbesondere werden Aluminiumhydroxid, Schichtsilikate, Kieselsäure und Siliziumdioxid in allen gebräuchlichen Arten verwendet.

Daneben kommen in der Regel übliche Zusatz- und Hilfsstoffe zum Einsatz, wie beispielsweise Vulkanisationsaktivatoren, Vulkanisationsbeschleuniger, Vulkanisationsverzögerer, Kupplungsreagenzien für die Anbindung zwischen Kautschuk und Füllstoff, Mastikationshilfsmittel, Alterungsschutzmittel, UV-Schutzmittel, Zinkweiß, usw. Die üblichen Zusatz- und Hilfsstoffe, die hier beigegeben werden können, sind dem Fachmann bekannt und beispielsweise in "J. Schnetger, Lexikon der Kautschuktechnik, 2. Aufl., Hüthig, 1991" beschrieben.

Die Gewichtsverhältsnisse der Basismischung sind in der Regel so eingestellt, dass auf 100 Gewichtsteile der Kautschukkomponente (d.h., des Kautschuks oder der KautschukMischung) zwischen 20 und 240 Gewichtsteile Füllstoff kommen, vorzugsweise zwischen 50 und 150 Gewichtsteile Füllstoff, 20 bis 100 Gewichtsteile Weichmacher und 5 bis 80 Gewichtsteile Zusatzstoffe. Je nach Anwendungszweck können sich auch andere Verhältnisse ergeben. Bei der vorliegenden Erfindung kommt es weniger auf die absolute Zusammensetzung der Grundmischung an als vielmehr auf die spezifische Weichmacherverteilung zwischen Cap und Base.

Vorzugsweise enthält der Cap-Bereich einen Weichmachergehalt an Flüssigkautschuk von wenigstens 33 Gewichtsteilen bezogen auf 100 Gewichtsteile der Kautschukkomponente (33 phr). Bevorzugt werden zwischen 40 und ca. 80 Gewichtsteilen eingesetzt.

Flüssigkautschuke, die als Weichmacher in vulkanisierbaren Kautschukmischungen eingesetzt werden können, sind als solche bekannt. Mit derartigen flüssigen Polydienen wird ein besonders gutes Abriebverhalten bei guten Wintereigenschaften erzielt. Besonders geeignet ist Flüssigkautschuk mit einem Molekulargewicht M_{w} von 1500 bis 10000 g/mol und einem Vinylgehalt von 1 bis 50 % und vorzugsweise mit einem Molekulargewicht M_{w} von 2000 bis 5000 g/mol und einem Vinylgehalt von 20 bis 35 %, bevorzugt Polybutadien, z. B. Ricon® 130, Ricon Resins Inc., U.S.A.

Der Base-Bereich enthält vorzugsweise einen Weichmacheranteil von wenigstens 3 phr und maximal 45 phr Gewichtsteilen bezogen auf 100 Gewichtsteile der Kautschukkomponente.

Praktisch kann beispielsweise so vorgegangen werden, dass zwei Portionen der Kautschukgrundmischung für den Laufstreifen hergestellt werden, von denen der ein Flüssigkautschuk und der anderen ein anderer Standard-Weichmacher, insbesondere ein Weichmacher auf Mineralölbasis, zugesetzt wird. Selbstverständlich können die so erhaltenen Cap- und Base-Mischungen weiter modifiziert werden, das heißt es können Abweichungen in der Grundzusammensetzung und den Zuschlagsstoffen zwischen Cap-und Base-Mischungen eingestellt werden.

Vorzugsweise sind beide Laufstreifenmischungen für Cap- und Base-Bereich für Winterreifen geeignete Mischungen.

Die Kautschukfertigmischungen für Cap- und Base-Bereich, denen abschließend ein Vulkanisationsmittel zugegeben wurde, können beispielsweise coextrudiert, wie gewohnt weiterverarbeitet und schließlich vulkanisiert werden. Der Laufstreifen des erhaltenen Reifens besitzt dann die erfindungsgemäßen Spezifikationen.

In besonders bevorzugter Ausführungsform wird die Kautschukmischung für den Cap-Bereich durch Zusatz von flüssigem Polydien und die Kautschukmischung für den Base-Bereich durch Zusatz eines Standard-Kautschukweichmachers, vorzugsweise eines Weichmachers auf Mineralöl-Basis, so eingestellt, dass sich die Shore A Härte der Cap-Gummimischung mit zunehmender Lebensdauer eines daraus hergestellten Reifens verringert, wobei eine Verringerung während der ersten 10.000 km Laufzeit um D Shore A = (-5) bis (-10) als zufriedenstellend angesehen werden kann.

Nachfolgend wird die Erfindung anhand von Beispielen und näher erläutert.

Es wird eine schwefelvernetzbare Winterreifen-Kautschukgrundmischung hergestellt und für 4 Beispiele mit unterschiedlichen Weichmachern bei einteiligen Laufstreifen sowie unterschiedlichen Weichmachern und Weichmacherkonzentrationen in zweiteiligen Cap-und Base-Laufstreifen abgemischt.

**Tabelle 1: Grundzusammensetzung der Mischungen**

| | Cap (phr) | Base (phr) |
|---|---|---|
| NR | 60 | 70 |
| S-SBR^{a} | 40 | - |
| BR^{b} | - | 30 |
| Kieselsäure^{c} | 90 | - |
| Ruß | 14 | 70 |
| Silan-Kupplungsreagens^{d} | 6,4 | - |
| Alterungsschutzmittel | 4 | 1 |
| Ozonschutzwachs | 2,5 | - |
| Klebharz | - | 4 |
| Zinkoxid | 2,5 | 3 |
| Stearinsäure | 2,5 | 3 |
| Beschleuniger | 4 | 3 |
| Schwefel | 2 | 2 |

| | | |
|---|---|---|
| a NS116R, Nippon Zeon, Japan, Vinyl-Anteil: 67 Gew.-%, Styrol-Anteil 22 Gew.-% b High cis-Polybutadien c Zeosil 1165 MP, Rhodia, Frankreich d Silquest A 1589, General Electric Specialty, U.S.A. | | |

Die Zusammensetzungen der 4 Beispiele sind wie folgt:

### Beispiel 1:

Laufstreifenmischung für Winterreifen, wie oben angegeben, mit zusätzlich 45 phr TDAE

### Beispiel 2:

Laufstreifenmischung für Winterreifen, wie oben angegeben, mit zusätzlich 45 phr Flüssigpolymer Ricon 130

### Beispiel 3:

Laufstreifenmischung für Winterreifen, wie oben angegeben, mit zusätzlich 45 phr TDAE für den Cap-Bereich
und 14 phr TDAE für den Base-Bereich

### Beispiel 4:

Laufstreifenmischung für Winterreifen, wie oben angegeben, mit zusätzlich 45 phr Flüssigpolymer Ricon 130 für den Cap-Bereich und 14 phr TDAE für den Base-Bereich.

Die Laufstreifenmischungen werden teilweise unter Druck bei 160 °C, d.h. üblichen Laborbedingungen, zu Prüfkörpern vulkanisiert und teilweise innerhalb eines Reifenaufbaus eingesetzt bzw. aufgelegt, abschließend in einer Form vulkanisiert und Leistungsprüfungen am Reifen selbst unterzogen. Die Ergebnisse sind in Tabelle 2 wiedergegeben.

**Tabelle 2**

| | **Beispiel 1** | **Beispiel 2** | **Beispiel 3** | **Beispiel 4** |
|---|---|---|---|---|
| Laufstreifenaufbau | einschichtig | einschichtig | zweischichtig | zweischichtig |
| Weichmacher, Aufbau einschichtig | Mineralölbasis | Flüssig-BR | - | - |
| Weichmacher Cap | - | - | Mineralölbasis | Flüssig-BR |
| Weichmacher Base | - | - | Mineralölbasis | Mineralölbasis |
| Shore A Härte, einschichtig oder Cap | 62 | 62 | 62 | 62 |
| Shore A Härte, Base | - | - | 72 | 72 |
| Shore A an Laborprüfkörper nach Alterung unter Laborbedingungen | 68 | 66 | 68-69# | 63-65# |
| Steifigkeitsentwicklung nach Alterung des Laufstreifens unter Laborbedingungen (Luft 70 °C), S-Shore | 76 | 71 | 80# | 73# |
| Steifigkeitsentwicklung nach Reifenabriebprüfung (10.000 km) | 65 | 63-64 | 65-67# | 56# |

### Leistungsprüfung am Reifen/Reifenabriebsprüfung:

Die PKW-Fahrzeugprüfung erfolgt mit definierter Laufstrecke (mindestens 10.000 km) und Fahrstrecke (mindestens 50 % Autobahn, Rest Landstraße) bei einer der Fahrstrecke angepassten Geschwindigkeit. Felge, Fülldruck und Last sind nach Referenztabelle ETRTO definiert. In den Ausführungsbeispielen: VW Passat mit Reifen der Größe 205/55 R16 (2,9 bar Fülldruck) 10.500 km, 80 % Autobahn, 20 % Landstraße.

Bestimmung der Shore-Härte (ShA) an der Cap-Mischung des Laufstreifens: Die Shore A Härte wird an Laborprüfkörpern nach DIN 53 505, ASTM D2240 bestimmt. Am Reifen findet die Bestimmung an der Lauffläche des Reifens mittels einer mobilen Handmessapparatur statt. Verwendet wurde ein analoges Härteprüfgerät der Fa. Zwick (Zwick 3114). Der Shore-Härtemesser wird außerhalb von Schnitten oder Profilrillen zügig senkrecht zur Laufflächenoberfläche, also im Cap-Bereich des Reifens aufgesetzt. Die Auflagefläche muss eben sein und einen Durchmesser von wenigstens 18 mm besitzen. Die Shore-Härte wird 3 Sekunden nach dem Eindringen der Messnadel ins Gummi abgelesen. Diese Messung wird an 5 Stellen des Reifenumfangs vorgenommen. Messgenauigkeit +/- 1 ShA. Die Messung entspricht den Anforderungen der Norm DIN 53 505/IS0868.

### Ergebnisse:

Nur durch die erfindungsgemäße Variante in Beispiel 4, der Kombination einer Cap-Laufstreifenmischung, die einen flüssigen Kautschuk als Weichmacher enthält, und einer Base-Laufstreifenmischung, die einen Standard mineralölhaltigen Weichmacher enthält, kommt es zur beschriebenen Erweichung des Laufstreifens nach entsprechenden Einsatzbedingungen. Dieser Effekt ist insofern überraschend, da diese Erweichung sowohl beim Reifen unter Laboralterungsbedingungen wie auch bei Laborprüfkörpern nicht zu finden ist. Es ist daher anzunehmen, dass die Beanspruchung im tatsächlichen Belastungsbetrieb (Walkbewegungen, auftretende Scherkräfte) zu dem beobachteten Effekt beiträgt.

## Patentansprüche

1. Fahrzeugreifen aus vulkanisiertem Reifengummi mit einem zweischichtigen Laufstreifen aus Cap- und Basebereich, wobei für Cap und Base unterschiedliche Gummimischungen gewählt werden, **dadurch gekennzeichnet, dass** sich die Shore-A-Härte der Cap-Gummimischung mit zunehmender Laufleistung des Reifens verringert.

2. Fahrzeugreifen nach Anspruch 1, **dadurch gekennzeichnet, dass** sich die Shore-A-Härte des Cap-Gummis bei einer Reifenabriebsprüfung nach 10.000 km um wenigstens D Shore-A = 5 verringert.

3. Fahrzeugreifen nach Anspruch 1 oder 2, **dadurch gekennzeichnet, dass** der Unterschied der Anfangs-Shore-A-Werte für Cap- und Base-Bereich auf größer als 5 eingestellt wird, wobei der Base-Bereich die höheren Shore-A-Härte-Werte besitzt.

4. Fahrzeugreifen nach Anspruch 3, **dadurch gekennzeichnet, dass** der Cap-Bereich eine Anfangs-Shore-A-Härte von höchstens 68 ShA aufweist.

5. Fahrzeugreifen nach einem der Ansprüche 1 bis 4, **dadurch gekennzeichnet, dass** es ein Winterreifen ist.

6. Fahrzeugreifen nach einem der Ansprüche 1 bis 5, **gekennzeichnet durch** einen Laufstreifen gemäß einem der Ansprüche 7 bis 13.

7. Laufstreifen für einen Fahrzeugreifen, insbesondere nach einem der Ansprüche 1 bis 5, mit einem zweischichtigen Aufbau aus Cap- und Basebereich, bei dem der Cap-Bereich eine vulkanisierbare Kautschukmischung für eine weniger steife Gummimischung als für den Base-Bereich aufweist, **dadurch gekennzeichnet, dass** nur die Kautschukmischung des Cap-Bereichs einen durch Vulkanisation in der Gummimischung fixierbaren Weichmacher enthält und der Cap-Bereich keine Glyceride und kein Faktis enthält.

8. Laufstreifen nach Anspruch 7, **dadurch gekennzeichnet, dass** der Cap-Bereich flüssigen Kautschuk als Weichmacher enthält.

9. Laufstreifen nach Anspruch 7 oder 8, **dadurch gekennzeichnet, dass** die vulkanisierbare Kautschukmischung für den Base-Bereich einen Standard-Kautschukweichmacher enthält.

10. Laufstreifen nach Anspruch 9, **dadurch gekennzeichnet, dass** der Standard-Weichmacher ein mineralölbasierter Weichmacher ist.

11. Laufstreifen nach einem der Ansprüche 7 bis 10, **dadurch gekennzeichnet, dass** der Cap-Bereich einen Weichmachergehalt von wenigstens 33 Gewichtsteilen bezogen auf 100 Gewichtsteile der Kautschukkomponenten enthält.

12. Laufstreifen nach einem der Ansprüche 7 bis 11, **dadurch gekennzeichnet, dass** der Flüssigkautschuk ein flüssiges Polydien mit einem Molekulargewicht M_{w} von 1500 bis 10000 g/mol und einem Vinylgehalt von 1 bis 50 % und vorzugsweise mit einem Molekulargewicht M_{w} von 2000 bis 5000 g/mol und einem Vinylgehalt von 20 bis 35 %.

13. Laufstreifen nach Anspruch 12, **dadurch gekennzeichnet, dass** das Polydien Polybutadien ist.

14. Laufstreifen nach einem der Ansprüche 7 bis 13, **dadurch gekennzeichnet, dass** die beiden Laufstreifenmischungen für Cap- und Base-Bereich für Winterreifen geeignete Mischungen sind.

## Claims

1. Vehicle tyre of vulcanized tyre rubber with a two-layer tread comprising a cap region and a base region, different rubber compounds being chosen for the cap and the base, **characterized in that** the Shore A hardness of the cap rubber compound decreases with increasing mileage of the tyre.

2. Vehicle tyre according to Claim 1, **characterized in that** the Shore A hardness of the cap rubber in a tyre abrasion test after 10,000 km is reduced by at least D Shore A = 5.

3. Vehicle tyre according to Claim 1 or 2, **characterized in that** the difference between the initial Shore A values for the cap region and the base region is set to greater than 5, the base region having the higher Shore A hardness values.

4. Vehicle tyre according to Claim 3, **characterized in that** the cap region has an initial Shore A hardness of at most 68 ShA.

5. Vehicle tyre according to one of Claims 1 to 4, **characterized in that** it is a winter tyre.

6. Vehicle tyre according to one of Claims 1 to 5, **characterized by** a tread according to one of Claims 7 to 13.

7. Tread for a vehicle tyre, in particular according to one of Claims 1 to 5, with a two-layer construction comprising a cap region and a base region, in which the cap region comprises a vulcanizable crude rubber compound for a less rigid rubber compound than for the base region, **characterized in that** only the crude rubber compound of the cap region contains a softener which can be fixed in the rubber compound by vulcanization and the cap region contains no glycerides and no factice.

8. Tread according to Claim 7, **characterized in that** the cap region contains liquid crude rubber as a softener.

9. Tread according to Claim 7 or 8, **characterized in that** the vulcanizable crude rubber compound for the base region contains a standard rubber softener.

10. Tread according to Claim 9, **characterized in that** the standard softener is a mineral oil-based softener.

11. Tread according to one of Claims 7 to 10, **characterized in that** the cap region comprises a softener content of at least 33 parts by weight with respect to 100 parts by weight of the crude rubber components.

12. Tread according to one of Claims 7 to 11, **characterized in that** the liquid crude rubber is a liquid polydiene with a molecular weight Mw of 1500 to 10,000 g/mol and a vinyl content of 1 to 50% and preferably with a molecular weight Mw of 2000 to 5000 g/mol and a vinyl content of 20 to 35%.

13. Tread according to Claim 12, **characterized in that** the polydiene is polybutadiene.

14. Tread according to one of Claims 7 to 13, **characterized in that** the two tread compounds for the cap region and the base region are compounds that are suitable for winter tyres.

## Revendications

1. Bandage pour roue de véhicule, en caoutchouc vulcanisé de bandage, présentant une bande de roulement en deux couches constituée d'une partie de chapeau d'une partie de base, des mélanges différents de caoutchouc étant sélectionnés pour le chapeau et la base,
**caractérisé en ce que**
la dureté Shore-A du mélange de caoutchouc de chapeau diminue lorsque le kilométrage du bandage augmente.

2. Bandage pour roue de véhicule selon la revendication 1, **caractérisé en ce que** la dureté Shore-A du caoutchouc du chapeau diminue d'au moins D Shore-A = 5 après 10 000 km de test d'usure du bandage.

3. Bandage pour roue de véhicule selon les revendications 1 ou 2, **caractérisé en ce que** la différence entre les valeurs initiales de Shore-A de la partie de chapeau et de la partie de base est réglée à plus de 5, la partie de base possédant la plus haute valeur de dureté Shore-A.

4. Bandage pour roue de véhicule selon la revendication 3, **caractérisé en ce que** la partie de chapeau présente une dureté Shore-A initiale d'au plus 68 ShA.

5. Bandage pour roue de véhicule selon l'une des revendications 1 à 4, **caractérisé en ce qu'**il s'agit d'un bandage d'hiver.

6. Bandage pour roue de véhicule selon l'une des revendications 1 à 5, **caractérisé par** une bande de roulement selon l'une des revendications 7 à 13.

7. Bande de roulement pour bandage pour roue de véhicule, en particulier selon l'une des revendications 1 à 5, qui présente une structure en deux couches constituée d'une partie de chapeau et d'une partie de base, la partie de chapeau présentant un mélange de caoutchouc vulcanisable qui donne un mélange de caoutchouc moins rigide que celui de la partie de base,
**caractérisée en ce que**
seul le mélange de caoutchouc de la partie de chapeau contient un plastifiant qui peut être fixé par vulcanisation dans le mélange de caoutchouc et
**en ce que** la partie de chapeau ne contient ni glycérides ni caoutchouc factice.

8. Bande de roulement selon la revendication 7, **caractérisée en ce que** la partie de chapeau contient comme plastifiant du caoutchouc liquide.

9. Bande de roulement selon les revendications 7 ou 8, **caractérisée en ce que** le mélange de caoutchouc vulcanisable prévu pour la partie de base contient un plastifiant standard pour caoutchouc.

10. Bande de roulement selon la revendication 9, **caractérisée en ce que** le plastifiant standard est un plastifiant à base d'huile minérale.

11. Bande de roulement selon l'une des revendications 7 à 10, **caractérisée en ce que** la partie de chapeau contient une teneur en plastifiant d'au moins 33 parties en poids pour 100 parties en poids des composants de caoutchouc.

12. Bande de roulement selon l'une des revendications 7 à 11, **caractérisée en ce que** le caoutchouc liquide est un polydiène liquide d'un poids moléculaire M_{W} de 1 500 à 10 000 g/mole et d'une teneur en vinyle de 1 à 50 % et de préférence d'un poids moléculaire M_{W} de 2 000 à 5 000 g/mole et d'une teneur en vinyle de 20 à 35 %.

13. Bande de roulement selon la revendication 12, **caractérisée en ce que** le polydiène est un polybutadiène.

14. Bande de roulement selon l'une des revendications 7 à 13, **caractérisée en ce que** les deux mélanges de bande de roulement prévus pour la partie de chapeau et la partie de base sont des mélanges qui conviennent pour des bandages d'hiver.
